# EUROPEAN PATENT APPLICATION

(11) **EP 2 829 934 A2**
(43) Date of publication of application: **28.01.2015**
(21) Application number: 14176363.1
(22) Date of filing: 09.07.2014
(51) Int. Cl.: G05B 23/02

(54) **Methods and apparatus for the creation and use of reusable fault model components**

(30) Priority: 22.07.2013 US 201313947818
(71) Applicant: Honeywell International Inc., Morristown, NJ 07962-2245 (US)
(72) Inventor: Vanderzweep, Jeff, Morristown, NJ New Jersey 07962-2245 (US); Felke, Tim, Morristown, NJ New Jersey 07962-2245 (US); Kolandavelu, Raghupathy, Morristown, NJ New Jersey 07962-2245 (US)
(74) Representative: Houghton, Mark Phillip

(57) **Abstract**

A method for creating and using a fault model comprising one or more fault model components is provided. The method comprises creating a reusable fault model component and incorporating the reusable fault model component into the fault model.

## Description

### TECHNICAL FIELD

The present invention generally relates to fault modeling using a hierarchical structure of components, and more particularly but not exclusively, to the creation and use of reusable fault model components.

### BACKGROUND

A fault model can be a central piece for a diagnostic system for data inference and decision making. A fault model may be implemented as an engineering model of something that could go wrong in the operation of a piece of equipment, which is composed of assemblies and sub-assemblies. A fault model may be used to help users or systems to identify and isolate a problem that occurs within that piece of equipment in order to make decisions with regard to equipment design, assembly/sub-assembly choice and/or design, and to formulate action plans to accommodate potential failures.

Creating and maintaining a fault model is costly and requires the time and attention of system experts. This cost is compounded if the model needs to be re-created for each application of the system (or assembly) to a new, higher level system or platform. Accordingly, it is desirable to minimize the re-creation of assemblies/sub-assemblies that are frequently used. Furthermore, other desirable features and characteristics will become apparent from the subsequent detailed description and the appended claims, taken in conjunction with the accompanying drawings and the foregoing technical field and background.

### BRIEF SUMMARY

Some embodiments provide a method for creating and using a fault model comprising one or more fault model components. The method creates a reusable fault model component; and incorporates the reusable fault model component into the fault model.

Some embodiments provide a method for creating reusable sub-assemblies for use in a fault model. The method imports design data for an assembly of the fault model, the assembly comprising a plurality of sub-assemblies, wherein each of the plurality of sub-assemblies is associated with a sub-assembly type; analyzes the design data to identify one of the plurality of sub-assemblies based on pre-determined criteria; identifies a sub-assembly type associated with the one of the plurality of sub-assemblies; compares the identified sub-assembly type to a plurality of types, wherein the plurality of types is associated with a plurality of complete reusable sub-assemblies; and when the identified sub-assembly type does not match one of the plurality of types, creates a complete reusable sub-assembly; and incorporates the complete reusable sub-assembly into the assembly of the fault model.

Some embodiments provide a non-transitory computer-readable storage medium. The non-transitory computer-readable storage medium has one or more instructions thereon for creating and using a fault model which, when executed by a processor, cause the processor to import design data for an assembly, the assembly comprising a plurality of sub-assemblies, wherein each of the plurality of sub-assemblies is associated with a sub-assembly type; analyze the design data to identify one of the plurality of sub-assemblies based on pre-determined criteria; identify a sub-assembly type associated with the one of the plurality of sub-assemblies; compare the identified sub-assembly type to a plurality of types associated with complete reusable sub-assemblies; and when the identified sub-assembly type does not match one of the plurality of types, create a complete reusable sub-assembly; and place the complete reusable sub-assembly into an appropriate slot in the fault model.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic block diagram representation of a fault modeling system, according to some embodiments;
FIG. 2 is a hierarchical diagram representation of a fault model, according to some embodiments;
FIG. 3 is a hierarchical diagram representation of a fault model, as applied to an automobile, according to some embodiments;
FIG. 4 is a chart that illustrates inheritance, as applied to vehicle fault model design, according to some embodiments;
FIG. 5 is a chart that illustrates a specific example of inheritance, as applied to vehicle fault model design, according to some embodiments;
FIG. 6 is a high level flow chart that illustrates a method of creating and using a fault model, according to some embodiments; and
FIG. 7 is another flow chart that illustrates a method of creating and using a fault model, according to some embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to methods used to create and employ reusable components within a fault model. Each reusable component includes distinct fault model characteristics and may be re-used an unlimited number of times in higher level assemblies. In certain embodiments, a component necessary to a given higher level assembly is chosen based on pre-defined failure criteria. When that component corresponds to an existing reusable fault model component, the reusable fault model component is incorporated into the fault model. When that component does not correspond to an already-existing reusable fault model component, then an appropriate reusable fault model component is created and incorporated into the fault model.

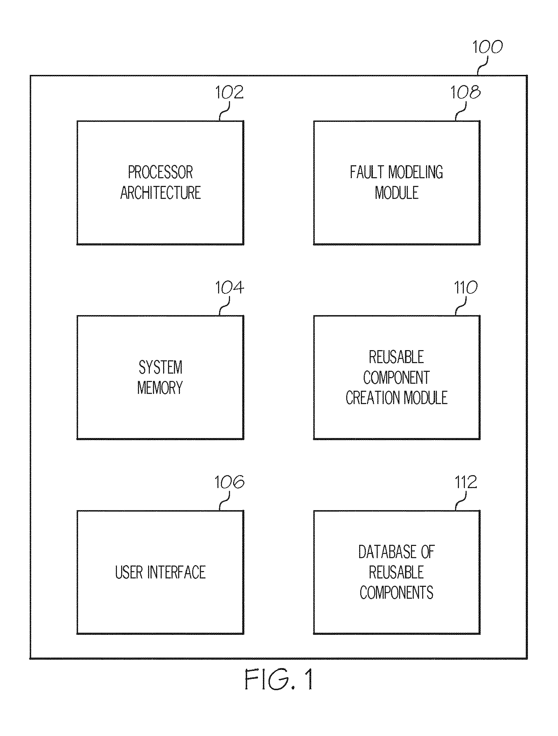

Referring now to the drawings, FIG. 1 is a functional block diagram of a fault modeling system 100. The fault modeling system 100 may be implemented using any desired platform. For example, the fault modeling system 100 could be realized as any of the following, without limitation: a desktop computer, a laptop computer, a server system, a mobile device, a specialized piece of diagnostic equipment, or any other device that includes a processor architecture 102.

The fault modeling system may include, without limitation: a processor architecture 102, system memory 104, a user interface 106, a fault modeling module 108, a reusable component creation module 110, and a database of reusable components 112. In practice, an embodiment of the fault modeling system 100 may include additional or alternative elements and components, as desired for the particular application. For example, additional components such as displays and user input components may be employed without departing from the scope of the present disclosure. For ease of illustration and clarity, the various physical, electrical, and logical couplings and interconnections for these elements and features are not depicted in FIG. 1. Moreover, it should be appreciated that embodiments of the fault modeling system 100 will include other elements, modules, and features that cooperate to support the desired functionality. For simplicity, FIG. 1 only depicts certain elements that relate to the fault modeling techniques described in more detail below.

The processor architecture 102 may be implemented using any suitable processing system, such as one or more processors 110 (e.g., multiple chips or multiple cores on a single chip), controllers, microprocessors, microcontrollers, processing cores and/or other computing resources spread across any number of distributed or integrated systems, including any number of "cloud-based" or other virtual systems.

The processor architecture 102 is in communication with system memory 104. The system memory 104 represents any non-transitory short or long term storage or other computer-readable media capable of storing programming instructions for execution on the processor architecture 102, including any sort of random access memory (RAM), read only memory (ROM), flash memory, magnetic or optical mass storage, and/or the like. It should be noted that the system memory 104 represents one suitable implementation of such computer-readable media, and alternatively or additionally, the processor architecture 102 could receive and cooperate with external computer-readable media that is realized as a portable or mobile component or application platform, e.g., a portable hard drive, a USB flash drive, an optical disc, or the like.

The user interface 106 accepts information from a user of the fault modeling system 100, including information necessary to building and utilizing a fault model, including fault model components. User interface 106 may include any means of transmitting user input into the fault modeling system, to include without limitation: a computer keyboard, mouse, touch-pad, and/or trackball and screen; a touch-screen device; or the like.

The fault modeling module 108 is suitably configured to create fault models, analyze fault models, and perform a variety of tasks relating to fault modeling. The fault modeling module 108 provides detail regarding a component of interest, including basic functionality of the component, behavior of the component when it fails, appearance and characteristics of the component during failure, and the like. In the context of this invention, a fault model consists of descriptive data for an asset that provides the information needed by automated maintenance support systems, for which numerous published standards for operation exist (such as IEEE 13374, ARINC 624, etc.).

In certain embodiments, the fault modeling module 108 utilizes a hierarchical organization of items within a fault model, which may be applied to hardware components, software components, systems, configuration/personalization mechanisms, inter-element interfaces, and the like. This hierarchical organization may include the following levels, without limitation: component types, standard components, component specifications, and component implementations.

At the component type level, the fault model records aspects of the fault model that are required for subordinate items of that component type. For example, fault models for elements that belong to the Electrical Controller component type are required to provide standard failure modes, range checks for all interfaces, and degradation equations, but are not required to provide performance equations. However, in another example, fault models for elements that belong to the Mechanical Actuator component type are required to provide all of the included features of the Electrical Controller component type, to include performance equations.

At the standard component level, the fault model records generic versions of equations and monitor definitions that encode the structure of equations and monitors, but leaves the specification of parameters of the equations and binding to specific input/output (I/O) to lower levels. At the component specification level, the fault model records some of the parameters of the equations and the binding to specific I/O. At the component implementation level, the fault model records failure rates, symptom occurrence rates, and remaining equation parameters.

In practice, the fault modeling module 108 may be implemented with (or cooperate with) the processor architecture 102 to perform at least some of the functions and operations described in more detail herein. In this regard, the fault modeling module 108 may be realized as suitably written processing logic, application program code, or the like.

Based upon input received via the user interface 106 and information obtained via the fault modeling module 108, the fault modeling system 100 determines components necessary for incorporation into a fault model in various stages of completion and/or testing. The reusable component creation module 110 creates complete and/or incomplete reusable components for incorporation into the current fault model of the fault modeling module 108. The structure of the overall fault model, created by the fault modeling module 108, allows for some, or all, of the fault model components for any given assembly to be "generalized". For example, "Valve ABC version 1" at the component implementation hierarchical level (as described with regard to the fault modeling module 108) may include all characteristics and properties of a generic valve, but also include characteristics and properties specific to "Valve ABC version 1", which may not be shared amongst all valves in the assembly. A reusable component may be created using the properties of "Valve ABC version 1" that are common to all valves, effectively "generalizing" the component implementation.

These "generalized" fault model components can be re-used in multiple locations on a single asset or re-used across many different assets. The fault modeling module 108 interacts with the user, through the generalization process, to convert installation specific input, output, and variable references into generic equivalents, and to record information for each of these interfaces so that the fault modeling module 108 can assist future users in accurately connecting the reusable component into installation locations on other higher level assemblies and assets.

In certain embodiments, reusable components of the fault model are created at the component specification hierarchical level (as described with regard to the fault modeling module 108). In some embodiments, however, reusable components of the fault model may be created at the component implementation level. In either case, the "generalization" process occurs when looking to a higher level of the hierarchy to determine what properties are shared among all applicable components.

In practice, the reusable component creation module 110 may be implemented with (or cooperate with) the processor architecture 102 to perform at least some of the functions and operations described in more detail herein. In this regard, the reusable component creation module 110 may be realized as suitably written processing logic, application program code, or the like.

The database of reusable components 112 may be implemented in system memory 104 and/or elsewhere, including external memory devices (described above in relation to potential implementations of system memory 104). In certain embodiments, the database of reusable components 112 is maintained continuously and is utilized in the creation of a range of fault models. In this case, the database of reusable components 112 may include components applicable to creating and using fault models for a diverse range of assemblies. In other embodiments, the database of reusable components 112 is maintained for fault models of a certain category only. For example, the database of reusable components 112 may be kept for creating fault models of automobiles, while a separate and distinct database of reusable components (not shown in FIG. 1) may be kept for creating fault models of aircraft.

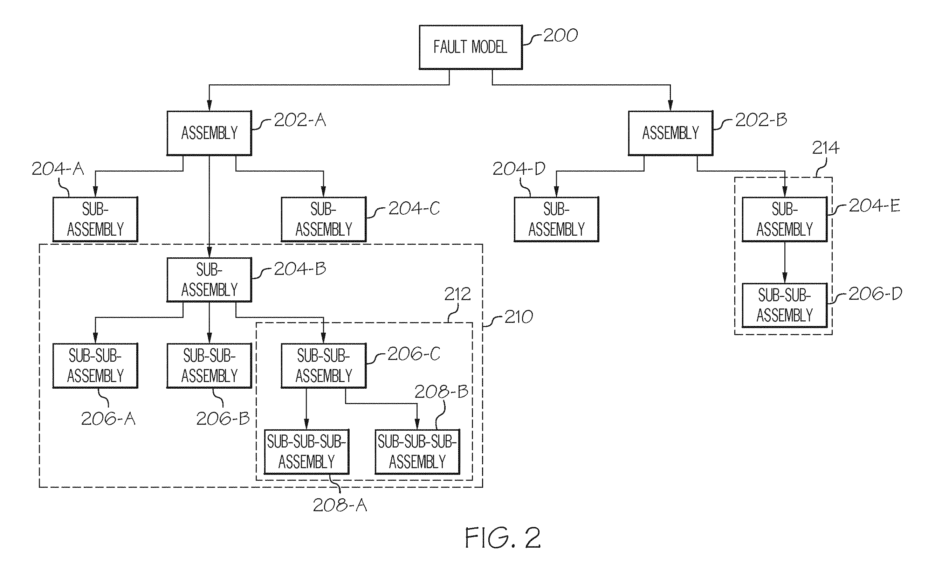

FIG. 2 is a hierarchical diagram representation of a fault model, according to some embodiments. The fault model 200 structure illustrated may belong to any piece of equipment, having multiple components, for which a fault model 200 is desired. A fault model 200 generally illustrates detail regarding the functionality of an assembly: how the assembly works, how the assembly fails, and what the assembly looks like when it fails. A fault model 200 may include, without limitation, one or more assemblies 202; one or more sub-assemblies 204; one or more sub-sub-assemblies 206; and one or more sub-sub-sub-assemblies 208. It should be appreciated that any number of layers of assemblies, sub-assemblies, etc. may be used, as appropriate for the physical system, device, or assembly that is the subject of the fault model.

Generally, the term "asset" is used for a top level assembly for which a completed fault model 200 is deployed to support automated maintenance functions. In contrast, an assembly 202 may be defined as a lower level model which contains the same information and structure as an asset, but is not deployed to support automated maintenance functions. Instead, assembly level models are integrated together to create asset level models. It is possible that the providers of complex products like engines, avionic suites and environmental control systems will consider these to be assets and provide automated maintenance support accordingly while a vehicle integrator will treat them as assemblies. This is possible because the invention allows a data package to exist in more than one modeling environment with different roles (asset/assembly) in each.

As shown in FIG. 2, the assemblies (202-A, 202-B) represent the highest level parts, pieces, or subsets, which have been integrated together to form the fault model 200. Examples of an assembly may include, without limitation: transportation apparatus (e.g., vehicles), mechanical devices, electronic devices, or any system or device for which it is desired to utilize a fault model. An assembly may include one or more components, called sub-assemblies. (The term "component" is used herein to generically refer to any part of the fault model.) A sub-assembly may include one or more sub-sub-assemblies. This organizational model applies to all components that exist within a fault model hierarchy. Each assembly 202 may include one or more sub-assemblies 204, which are automatically included in any fault model 200 in which the assembly 202 is included. Further, each sub-assembly 204 may include one or more sub-sub-assemblies 206, which are automatically included in any assembly 202 in which the sub-assembly 204 is included. Each component, whether it is an assembly 202, sub-assembly 204, sub-sub-assembly 206, or any other component, carries with it all of its sub-components when incorporated into a higher level component. For example, sub-assembly 204-E, when incorporated into assembly 202-B, includes all components shown in border 214. In this case, when sub-assembly 204-E is used, it will always include sub-sub-assembly 206-D.

As another example, sub-assembly 204-B, when incorporated into assembly 202-A, includes all components shown in border 210. In this case, when sub-assembly 204-B is used, it will always include sub-sub-assemblies 206-A, 206-B, and 206-C, along with sub-sub-sub-assemblies 208-A and 208-B. If sub-assembly 204-B is removed from the fault model 200, all components shown in border 210 would automatically be removed as well.

In a final example, sub-sub-assembly 206-C, when incorporated into sub-assembly 204-B, includes all components shown in border 212. In this case, when sub-sub-assembly 206-C is used, it will always include sub-sub-sub-assemblies 208-A and 208-B. Sub-sub-assembly 206-C may be removed from the fault model 200, which would automatically remove sub-sub-sub-assemblies 208-A and 208-B, but would not disturb any of the other components of the fault model 200.

Additionally, certain components of the fault, model 200 may be designated as reusable components, regardless of the level at which each component is located in the fault model hierarchy (i.e., whether the component is an assembly 202, sub-assembly 204, sub-sub-assembly 206, etc.). All components are not required to be reusable components in order for the fault model 200 to take advantage of reusability for one or more components. Similar to the structural rules described above, when a reusable component is incorporated into a fault model 200, all sub-components belonging to the reusable component are "folded into" the component and, as a consequence, are also incorporated into the fault model 200. By definition, any and all sub-components of a reusable component will also be reusable.

In this example, sub-sub-assembly 206-C may be designated as a reusable component. As shown, sub-sub-assembly 206-C has multiple sub-components that are reused when the sub-sub-assembly 206-C is incorporated into another assembly. If this is the case, sub-sub-assembly 206-C will have an assigned part number or an identifier indicating that it is a reusable component. Sub-sub-assembly 206-C is also a lower-level subcomponent of sub-assembly 204-B, which may be designated as a reusable component itself. If this is the case, sub-assembly 204-B will also have an assigned part number indicating that it is a reusable component. Here, if sub-assembly 204-B is moved, all of its subcomponents will move with it, including sub-sub-assembly 206-C. In the first scenario, sub-sub-assembly 206-C is a standalone reusable component. In the second scenario, sub-sub-assembly 206-C is an attached subcomponent of reusable component, sub-assembly 204-B.

To illustrate this concept, an example of a Lane Departure Radar (LDR) device, commonly associated with an automobile assembly, is given. An LDR may be a standalone reusable component, incorporated into an automobile assembly or any other higher level component on its own. Alternatively, an LDR may be a part of an automobile Safety System reusable component, where the LDR is merely a portion of the overall reusable component, which may be incorporated into any higher level component.

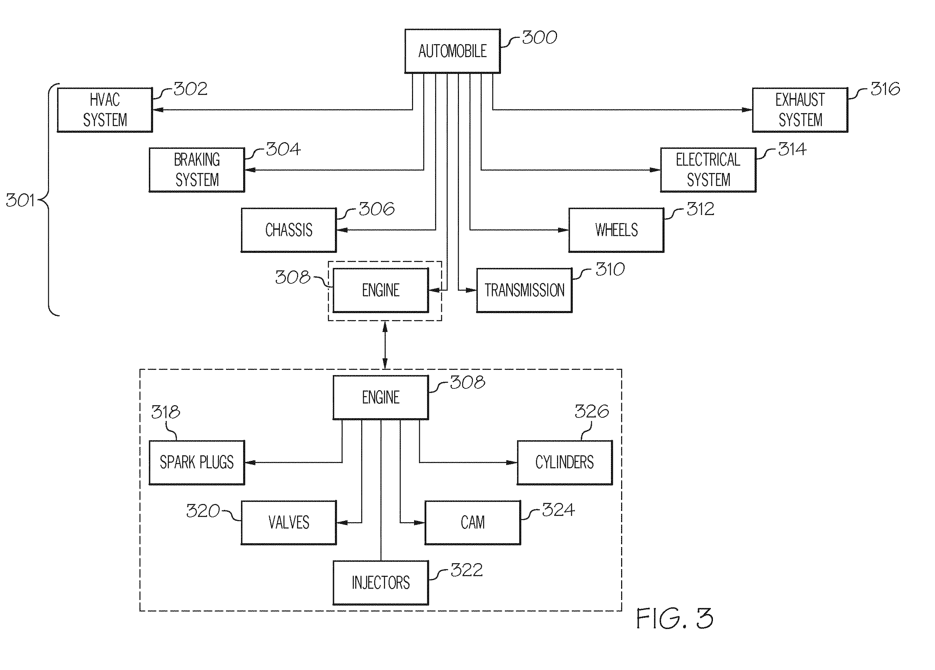

FIG. 3 is a hierarchical diagram representation of a fault model, as applied to a vehicle, according to some embodiments. This diagram illustrates a specific example of an automobile assembly 300. The automobile assembly 300 contains, without limitation, the following sub-assemblies: a heating, ventilating, and air conditioning (HVAC) system 302; a braking system 304; a chassis 306; an engine 308; a transmission 310; wheels 312; an electrical system 314; and an exhaust system 316. These sub-assemblies of the automobile assembly 300 may be operatively associated with one another or otherwise configured to cooperate with one another as needed to support the desired functionality-in particular, the fault modeling functionality described herein. For ease of illustration and clarity, the various logical couplings and interconnections for these elements and features are not depicted in FIG. 3. Moreover, it should be appreciated that embodiments of the automobile assembly 300 will include other assemblies, sub-assemblies, sub-sub-assemblies, etc., that cooperate to support the desired functionality. For simplicity, FIG. 3 only depicts certain sub-assemblies that relate to the fault modeling of the vehicle described in more detail below.

As shown, the sub-assemblies 301 are components of the automobile assembly 300. Each of the sub-assemblies 301 may be further broken down into its own components, which are included in any assembly into which the sub-assembly 301 is incorporated. For example, the engine sub-assembly 308 includes all of its own components, including, without limitation: spark plugs 318, valves 320, injectors 322, cam 324, and cylinders 326, as shown in FIG. 3. When the engine sub-assembly 308 is incorporated into the automobile assembly 300, or any other assembly of any other fault model, the engine sub-assembly 308 brings with it all of its own components. The same principle applies to other assemblies, sub-assemblies, sub-sub-assemblies, and other components at any level within the assembly/sub-assembly hierarchy. When a component is integrated into a higher level assembly, all of its component parts (or sub-components) are also included in the integration.

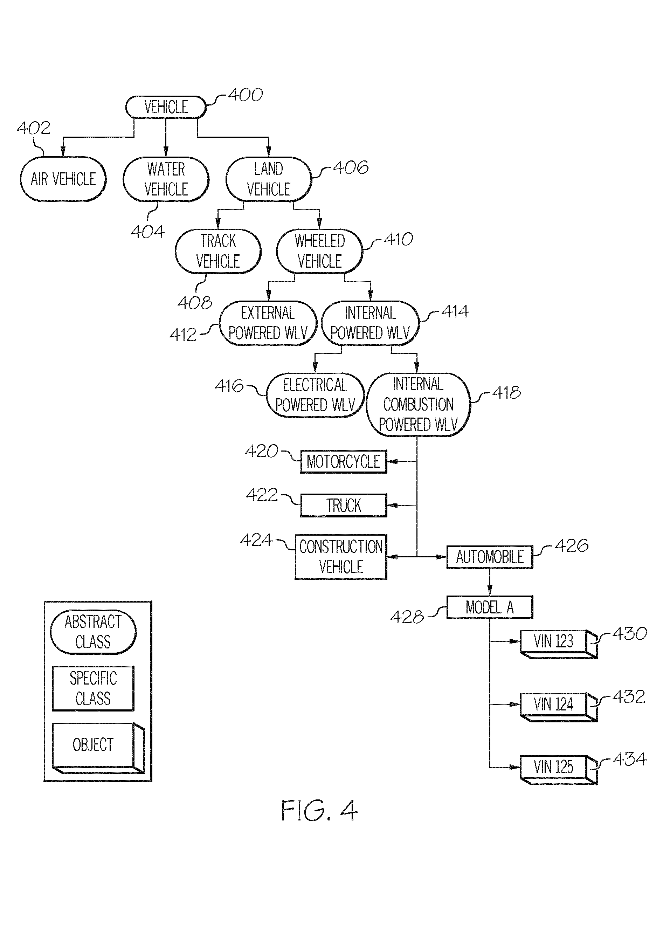

FIG. 4 is a chart that illustrates inheritance, as applied to vehicle fault model design, according to some embodiments. Inheritance defines the relationships between abstract classes, specific classes, and objects. An abstract class defines the attributes and content of an entity. Abstract classes do not have the capability to be instantiated, but are used by sub-classes to inherit the attributes and content that are common to all sub-classes of the abstract class. The inheritance chart begins at the top with abstract class vehicle 400. In this example, the abstract class vehicle 400 defines characteristics of a vehicle to be used by all sub-classes of abstract class vehicle 400. Abstract class vehicle 400 cannot be instantiated, and does not define a vehicle that may be created based only on its characteristics. However, the attributes defined by abstract class vehicle 400 may be used by sub-classes, in combination with other chosen attributes, to define a more specific vehicle that may be instantiated.

Here, the abstract class vehicle 400 is used to create abstract classes air vehicle 402, water vehicle 404, and land vehicle 406, which are all sub-classes of abstract class vehicle 400. Abstract class land vehicle 406 is used to create abstract classes track vehicle 408 and wheeled vehicle 410. Abstract class wheeled vehicle 410 is used to create abstract classes external powered wheeled vehicle (WLV) 412 and internal powered WLV (414). Abstract class internal powered WLV 414 is used to create abstract classes electrical powered WLV 416 and internal combustion powered WLV 418.

Abstract class internal combustion WLV 418 is used to create specific classes motorcycle 420, truck 422, construction vehicle 424, and automobile 326. A specific class has the same capabilities as an abstract class (e.g., defining the attributes of an entity), but a specific class also has the capability of allowing objects (i.e., instances) of the specific class to be instantiated. Here, specific class automobile 426 is used to create specific class Model A 428. Specific class Model A 428 is used to create objects VIN 123 (430), VIN 124 (432), and VIN 125 (434). An object is an instance of a specific, or instantiable, class, including defined attributes that may have merely been characterized (but not instantiated) in the specific class from which the object is instantiated.

As applied to fault modeling in the context of this application, abstract classes may be realized at the component type or standard component levels (as described with regard to FIG. 1). Specific classes may be realized at the component specification level, and objects may be realized at the component implementation level.

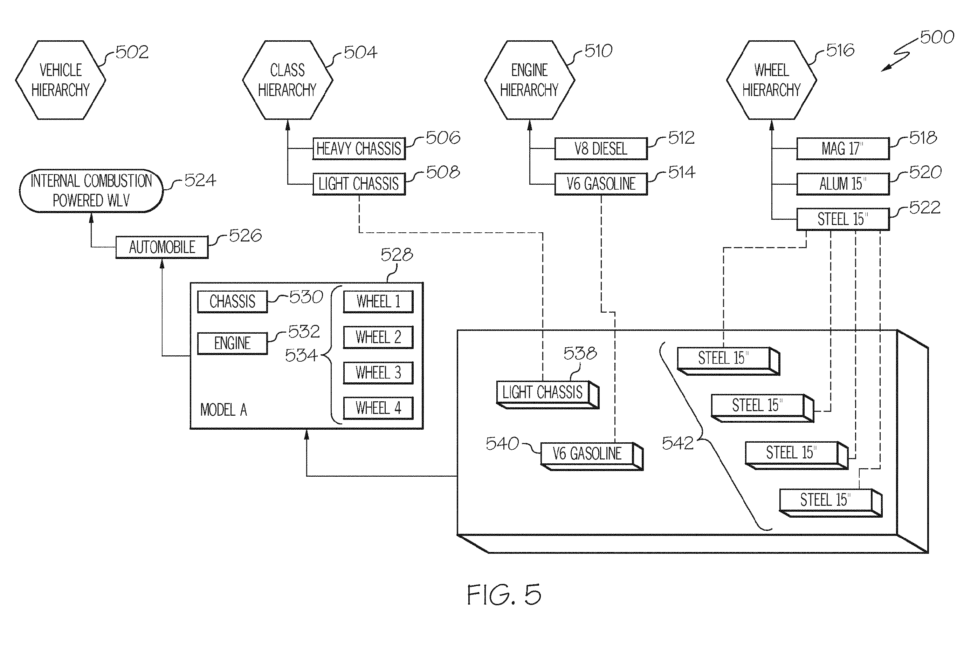

FIG. 5 is a chart that illustrates a specific example of inheritance, as applied to vehicle fault model design, according to some embodiments. This inheritance example begins with a representation of a condensed vehicle hierarchy 502, which corresponds to the vehicle hierarchy 400 illustrated in FIG. 4. Additional component hierarchies shown for purposes of this example include a chassis hierarchy 504 (including specific classes heavy chassis 506 and light chassis 508); an engine hierarchy 510 (including specific classes V8 Diesel 512 and V6 Gasoline 514); and a wheel hierarchy 516 (including specific classes Mag 17" 518, Alum 15" 520, and Steel 15" 522).

The abstract class internal combustion WLV 524 corresponds to abstract class internal combustion WLV 418 shown in FIG. 4, and is used to create specific class automobile 526, which corresponds to specific class automobile 426 of FIG. 4. Specific class automobile 526 is then used to create specific class Model A 528, which corresponds to specific class Model A 428 shown in FIG. 4. As shown, for purposes of this example, specific class Model A 528 is defined to include a chassis 530, an engine 532, and four wheels 534. These defined vacancies may be referred to as "slots", indicating a place within a class or object that has been earmarked to contain a specified component or category of component.

Specific class Model A 528 is then used to create object VIN 123 (536), which corresponds to object VIN 123 (430) in FIG. 4. As shown, object VIN 123 (536) includes all of the components required by specific class Model A 528, and instantiates Model A 528 with actual components meeting the required criteria of each slot defined by specific class Model A 528. For example, the vacant slot defined to contain a chassis 530 in specific class Model A 528 is "filled" using object Light Chassis 538 in object VIN 123 (536). Similarly, the vacant slot defined to contain an engine 532 in specific class Model A 528 is filled using object V6 Gasoline 540. When instantiated in this way, VIN 123 (536) is a complete model of a single version of specific class Model A 528.

Automated processes support a user in the creation of new standard assemblies from ones that are already complete. For example, the model for the V6 Gasoline 540 engine is created from the existing model for the V6 Gasoline 514 engine. The software that mechanizes this invention allows a user to select the model for V6 Gasoline 514 and then command the system to "derive" a new model for V6 Gasoline 540. The software does this by making a new, top level record for V6 Gasoline 540 with all of the same attributes as V6 Gasoline 514. This new, top level record for V6 Gasoline 540 includes copies of all of the relationships to all of the sub-assemblies of V6 Gasoline 540, as well as copies of all relationships for which V6 Gasoline 514 entity is the "source" of the relationship. Relationships that identify the vehicles for which V6 Gasoline 514 is a sub-assembly, or other relationships for which V6 Gasoline 514 is the destination of the relationship, are not copied.

The software can automatically decide which relationships to copy and which to skip when deriving a new reusable assembly in the model because the metadata for the model indicates the source entity and destination entity of each relationship. Once the new model for V6 Gasoline 540 has been created, a user can identify the changes that are needed to capture the differences between these two engines. It is often the case that a model variation like this may, in reality, correspond to a change in the models for a few of the sub-assemblies, in order to provide a new feature, improve performance, or correct a defect. A side benefit of the mechanized invention is that there is a single model for elements of the model that are in fact common to both engines. This results in lower costs to maintain the accuracy of these portions of the model as new aspects of their behaviors are discovered in the field.

A final aspect of the invention is its ability to allow the user to select several specific models and to request that a new, more general, assembly is created to reflect their common properties and relationships. For example, in the previous scenario the user may wish to make a new, more general, assembly that includes the common aspects of the V6 Gasoline 514 and V6 Gasoline 540 engines. This new assembly could be named by the user to assist in its re-use (e.g., "Turbo Charged V6"), and edited to assist other users in creating more specialized engines from this model.

Each component of a fault model (shown as 200 in FIG. 2) may be modeled using an object (e.g., an instance of a specific class). In certain embodiments, the object may exist as a reusable fault model component that may be incorporated into a vacant slot within a fault model when needed, and may be stored within a database for reusable fault model components to be reused an unlimited number of times.

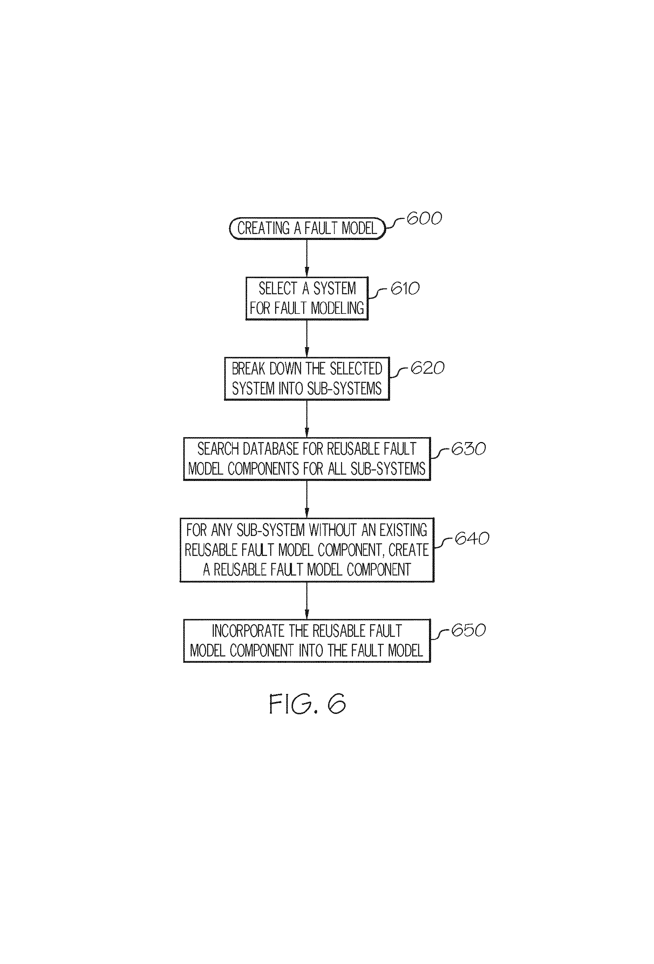

FIG. 6 is a high level flow chart that illustrates an embodiment of a process 600 of creating a fault model. The various tasks performed in connection with a process described here may be performed by software, hardware, firmware, or any combination thereof. For illustrative purposes, the description of a process may refer to elements mentioned above in connection with FIGS. 1-5. In practice, portions of a described process may be performed by different elements of the described system. It should be appreciated that a described process may include any number of additional or alternative tasks, the tasks shown in the figures need not be performed in the illustrated order, and that a described process may be incorporated into a more comprehensive procedure or process having additional functionality not described in detail herein. Moreover, one or more of the tasks shown in the figures could be omitted from embodiments of a described process as long as the intended overall functionality remains intact.

For ease of description and clarity, this example assumes that the process 600 begins by selecting a system for fault modeling (step 610). In certain embodiments, the system may be selected by a person constructing the model, or chosen by a computer system according to predefined criteria. After selecting the system (step 610), the process 600 analyzes the selected system and breaks the system down into sub-systems (step 620). Sub-systems comprise any functional part of the system. In certain embodiments, sub-systems only include those functional parts of the system in which failure occurs in a complex manner, requiring evaluation so that adjustments and/or corrections may be made during system development.

Once the system has been defined in terms of sub-systems (step 620), the process 600 then searches a stored database of reusable fault model components for each of the sub-systems (step 630). Generally, a fault model of a system contains fault model components to represent each sub-system, each of which is created during construction of the fault model of the entire system. In certain embodiments, one or more of these fault model components may already exist in a stored database of reusable fault model components. Here, the stored database is searched to locate reusable fault model components applicable to the fault model being created for the system.

Next, the process 600 identifies the sub-systems that do not have a corresponding reusable fault model component stored in the database, and creates a reusable fault model component for these sub-systems (step 640). After the reusable fault model component is created (step 640), the process 600 then incorporates the reusable fault model component into the fault model (step 620). In certain embodiments, the reusable fault model component is an object that has been instantiated from a specific class. The object may be incorporated into the fault model as an assembly, sub-assembly, or other component at any level within the fault model hierarchy.

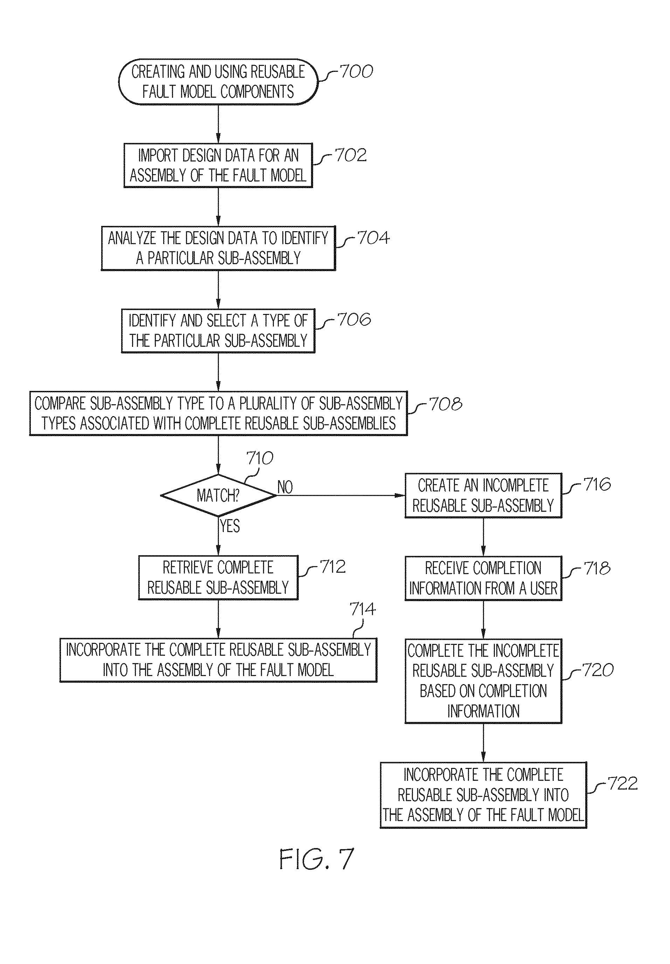

FIG. 7 is a flow chart that illustrates an embodiment of a process 700 of creating and using a fault model. This example assumes that the process 700 begins when a fault modeling system imports design data for an assembly, wherein a fault model of the assembly is to be generated (step 702). In certain embodiments, the design data may include schematics or technical documentation describing the assembly and/or specific parts of the assembly.

The process 700 then analyzes the design data to identify and select a particular sub-assembly (step 704) using pre-defined criteria. In certain embodiments, a sub-assembly meets pre-defined criteria if it has at least one electrical connection. For example, in the case of the vehicle described in FIGS. 3-5, the design data may include an electrical schematic, and a particular sub-assembly may be identified and/or chosen for fault modeling because it includes at least one electrical connection. In some embodiments, a sub-assembly meets pre-defined criteria if it has a pneumatic connection. In other embodiments, the pre-defined criteria is met if a sub-assembly includes at least one hydraulic connection. The selection of pre-defined criteria is a design choice, and may include any specified characteristic or attribute of the sub-assembly. In certain embodiments, the specified characteristic or attribute of interest is chosen due to its propensity for unexplained failure.

In the simplest case, each component in a schematic will identify a component class which is strongly correlated to one, or a small number, of reusable assemblies. This is accomplished through the specification of a component code or other nomenclature that limits the set of reusable assemblies that can be used in that location. In other cases, the association between a design element, like a component slot on a schematic and the set of reusable assemblies that can be placed in that slot, may be more difficult to determine. For example, in one scenario, the pre-defined criteria designed to assess the number and types of interfaces between the component and the other components with which it interacts. The results of this assessment provide the user with a small number of reusable assemblies that can be assigned to each location/slot in a higher level assembly.

Next, the process 700 identifies a type associated with the selected sub-assembly (step 706). The type of the selected sub-assembly identifies more specifically the part in question. For example, once the sub-assembly is identified as having at least one electrical connection, it is then further identified by type. In certain embodiments, the sub-assembly type is the name of a certain part, such as a lane departure radar. In other embodiments, the sub-assembly type is the name of a category of parts, such as a vehicle engine, which further includes sub-sub-assemblies, such as those referenced in FIG. 3. In certain embodiments, when creating a fault model for an automobile or other vehicle, each sub-assembly of the vehicle may have a type defined by a part classification, such as a Universal Parts Classification/Functional Name Analysis (UPC/FNA) designation. In other embodiments, each sub-assembly may have a type defined by a specific product structure, such as a Vehicle Partitioning and Product Structure (VPPS) designation. In still other embodiments, another methodology for assigning a type to each sub-assembly may be deciphered by the process 700.

The process 700 then compares the sub-assembly type to a plurality of sub-assembly types associated with a plurality of complete reusable sub-assemblies (step 708). A sub-assembly is "complete" when it has been instantiated as an object, including all specific attributes required for such. For example, any of the instantiated specific classes, also called objects, shown in FIG. 5 may be referred to as complete (e.g., light chassis 538, V6 Gasoline 540, Steel 15" 542, and VIN 123 (536)). A sub-assembly is reusable when it has been stored, maintained, and is capable of being used again, in an unlimited number of fault models and an unlimited number of times. The complete reusable sub-assemblies are stored in an internal or external memory location of the system, and in certain embodiments, the complete reusable sub-assemblies are maintained in a database dedicated for this purpose.

The comparison of the selected sub-assembly type to a database of types associated with a group of complete reusable sub-assemblies is used to determine if a complete version of the selected sub-assembly has already been created and already resides in system memory. If this is the case, then there is no need to re-create the required complete version of the selected sub-assembly. When the identified sub-assembly type matches one of the plurality of sub-assembly types associated with a plurality of complete reusable sub-assemblies (the "Yes" branch of 710), the process 700 retrieves the complete reusable sub-assembly associated with the match (step 712) from its location in memory, and incorporates it into the assembly of the fault model (step 714).

When the identified sub-assembly type does not match one of the plurality of sub-assembly types associated with a plurality of complete reusable sub-assemblies (the "No" branch of 710), it is determined that a complete version of the selected sub-assembly has not been created and does not reside in system memory. In this case, the process 700 then creates an incomplete reusable sub-assembly (step 716). The incomplete version of a reusable sub-assembly is created using the limited information available, and acts as a placeholder to be completed once comprehensive information is obtained. In certain embodiments, completion information is acquired by retrieving stored information from a location in memory, and in other embodiments, completion information is received as user input.

After creating the incomplete reusable sub-assembly (step 716), the process 700 then receives completion information from a user (step 718). In certain embodiments, receiving completion information from a user occurs in response to a request from the process 700. For example, when the comparison does not result in a match and the process 700 has determined that the required sub-assembly does not exist in system memory as a complete reusable sub-assembly, the process 700 prompts a user to provide input detailing the required completion information for the incomplete version of the reusable sub-assembly. In certain embodiments, an "expert" user is necessary to provide the required completion information, and is prompted by the process 700 to do so. For example, the process 700 may request "expert" user input in response to a set of questions, and this set of questions is designed to provide adequate detail so that the sub-assembly in question may be incorporated into any assembly without incompatibility or incompleteness issues. In some embodiments, the same set of questions is used for each new sub-assembly, and the set of questions is created to accommodate all potential sub-assemblies. Examples of completion information include, without limitation: specific failure rates for failure modes, specific co-occurrence rates between failure modes and symptoms, specific parameter values for analytic algorithms, specific trip points for diagnostic monitors, specific degradation profiles for predictive monitors, and the like.

Next, the process 700 completes the incomplete reusable sub-assembly based on the received completion information (step 720). In certain embodiments, the incomplete reusable sub-assembly is a specific class, and the completion information is used to instantiate the object using specific details. Using the Model A example illustrated in FIG. 5, chassis 530 could be designated as an incomplete reusable sub-assembly, and user input could be obtained to identify an appropriate light chassis 508 for the fault model. Once the appropriate light chassis 508 is chosen, it is then instantiated as object light chassis 538, which is suitable for incorporation into the fault model. In this example, object light, chassis 538 is a complete reusable component, which is capable of incorporation into a fault model and/or storage for use in any number of future fault models. In other embodiments, the incomplete reusable sub-assembly is an incomplete specific class, containing defined vacancies for only a portion of the required components. Again using the Model A example illustrated in FIG. 5, specific class Model A 528 could be designated as an incomplete reusable sub-assembly, and user input could be obtained to identify additional slots or defined vacancies that are necessary for Model A 528.

Generally, incomplete reusable assemblies operate as classes, and are identified separately in a fault model. Incomplete reusable assemblies include partial diagnostic information, along with automated rules regarding the process 700 for which the diagnostic information is utilized when a new assembly is created based on an incomplete assembly. To complete the assembly created from a partial assembly, a user adds additional diagnostic information. Incomplete assemblies are not included in final output of a fault model; they are used only to provide a baseline set of diagnostic information which is used to create a complete assembly. A diagnostic model may be created for a complete assembly (and any associated sub-assemblies) only, or the complete assembly may be linked as a sub-assembly to a higher level assembly. Each time a given assembly is associated with a different higher level assembly, it is essentially reused. Each time a given assembly is reused, usage-specific information is identified to give information regarding how the assembly is to be used within a fault model.

Following completion of the incomplete reusable sub-assembly, the process 700 incorporates the complete reusable sub-assembly into the assembly of the fault model (step 722). Further, in some embodiments, the newly-finalized complete reusable sub-assembly is stored in a location in system memory (e.g., a database of complete reusable sub-assemblies) for future use.

A diagnostic model, or fault model, may be created for any given assembly, provided specified fields of information associated with the assembly have been completed. Once values for these specified fields of information have been set, the fault model may be generated for the assembly, to include any sub-assemblies associated with the assembly. A distinct fault model may be generated for a lower level assembly, and another fault model may be generated for each fault model assembly that the lower level assembly is used in. The lower level fault model would typically have more particular diagnostic instructions for the individual lower level component alone, while the higher level fault model would have more information about how the assembly interacts with other subsystems in the fault model.

After the complete reusable sub-assembly is incorporated into the fault model (step 722), the fault model is executed. When a reusable fault model component is created, it is stored in a database system that allows it to be reused across multiple fault model level assemblies. Following execution of the fault model, any reusable fault model components remain stored in the database system. The reusable fault model component may be reused an unlimited number of times, until it is marked as obsolete because it is no longer being used by any fault model level assemblies.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for creating reusable sub-assemblies for use in a fault model, the method comprising:
importing design data for an assembly of the fault model, the assembly comprising a plurality of sub-assemblies, wherein each of the plurality of sub-assemblies is associated with a sub-assembly type;
analyzing the design data to identify one of the plurality of sub-assemblies based on pre-determined criteria;
identifying a sub-assembly type associated with the one of the plurality of sub-assemblies;
comparing the identified sub-assembly type to a plurality of types, wherein the plurality of types is associated with a plurality of complete reusable sub-assemblies; and
when the identified sub-assembly type does not match one of the plurality of types,
creating a complete reusable sub-assembly; and
incorporating the complete reusable sub-assembly into the assembly of the fault model.

2. The method of Claim 1, further comprising storing the complete reusable assembly for use in one or more additional fault models.

3. The method of Claim 1, wherein creating a complete reusable sub-assembly further comprises:
creating an incomplete reusable sub-assembly;
receiving completion information from a user; and
completing the incomplete reusable sub-assembly to create a complete reusable sub assembly, based on the completion information.

4. The method of Claim 1, wherein creating a complete reusable sub-assembly further comprises:
creating an incomplete reusable sub-assembly;
retrieving stored completion information from memory; and
completing the incomplete reusable sub-assembly to create a complete reusable sub assembly, based on the completion information.

5. The method of Claim 1, further comprising:
when a match has been located,
retrieving a complete reusable sub-assembly associated with the match; and incorporating the complete reusable sub-assembly into the assembly of the fault model.

6. The method of Claim 1, further comprising:
identifying a part classification associated with the one of the plurality of sub-assemblies; and
comparing the identified part classification to a plurality of part classifications associated with complete reusable sub-assemblies to locate a match.

7. The method of Claim 1, further comprising:
identifying a specific product structure associated with the one of the plurality of sub-assemblies; and
comparing the identified specific product structure to a plurality of specific product structures associated with complete reusable sub-assemblies to locate a match.

8. A non-transitory computer-readable storage medium having one or more instructions thereon for creating and using a fault model, the instructions, when executed by a processor, causing the processor to:
import design data for an assembly, the assembly comprising a plurality of sub-assemblies, wherein each of the plurality of sub-assemblies is associated with a sub-assembly type;
analyze the design data to identify one of the plurality of sub-assemblies based on pre-determined criteria;
identify a sub-assembly type associated with the one of the plurality of sub-assemblies;
compare the identified sub-assembly type to a plurality of types associated with complete reusable sub-assemblies; and
when the identified sub-assembly type does not match one of the plurality of types,
create a complete reusable sub-assembly; and
place the complete reusable sub-assembly into an appropriate slot in the fault model.

9. The non-transitory computer-readable storage medium of Claim 8, the one or more instructions further causing the processor to:
analyze the design data to identify one of the plurality of sub-assemblies having one or more parts associated with a pre-defined rate of failure.

10. The non-transitory computer-readable storage medium of Claim 8, wherein the pre-determined criteria comprises one or more electrical connections.
